# EUROPEAN PATENT APPLICATION

(11) **EP 4 601 038 A1**
(43) Date of publication of application: **13.08.2025**
(21) Application number: 24757225.8
(22) Date of filing: 16.02.2024
(51) Int. Cl.: H01M 4/505, H01M 4/525, H01M 10/052, H01M 4/02

(54) **CATHODE ACTIVE MATERIAL, PREPARATION METHOD THEREFOR, CATHODE COMPRISING SAME, AND LITHIUM SECONDARY BATTERY**

(30) Priority: 16.02.2023 KR 20230020972
(71) Applicant: LG Energy Solution, Ltd., Seoul 07335 (KR)
(72) Inventor: LEE, Youshin, Daejeon 34122 (KR); HAN, Gi Beom, Daejeon 34122 (KR); PARK, Kang Joon, Daejeon 34122 (KR); LEE, Jaeyoung, Daejeon 34122 (KR); PARK, Sin Young, Daejeon 34122 (KR); PARK, Byungchun, Daejeon 34122 (KR)
(74) Representative: Hoffmann Eitle
(86) International application number: PCT/KR2024/002130
(87) International publication number: WO 2024/172503

(57) **Abstract**

The present disclosure relates to a positive electrode active material of a lithium-rich manganese-based oxide that exhibits improved capacity characteristics as well as excellent life characteristics and rolling characteristics, and a method for preparing the same. The positive electrode active material includes a lithium-rich manganese-based oxide represented by the following Chemical Formula 1, and having a structure in which a rock-salt-type lithium manganese oxide and a layered lithium transition metal oxide are mixed, wherein the lithium-rich manganese-based oxide may have a prescribed internal porosity.

[Chemical Formula 1] Liₐ[Ni_{b}Co_{c}Mn_{d}Mₑ]O₂

in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

## Description

### [TECHNICAL FIELD]

### Cross Citation with Related Application(s)

This application claims the benefit of priority to Korean Patent Application No. 10-2023-0020972 filed on February 16, 2023 and Korean Patent Application No. 10-2024-0022244 filed on February 16, 2024 in the Korean Intellectual Property Office, the disclosure of which is incorporated herein by reference in its entirety.

The present disclosure relates to a positive electrode active material and a method for preparing the same. More specifically, the present disclosure relates to a positive electrode active material of a lithium-rich manganese-based oxide that exhibits improved capacity characteristics as well as excellent life characteristics and rolling characteristics, a method for preparing the same, a positive electrode and lithium secondary battery comprising the same.

### [BACKGROUND]

Lithium secondary batteries generally consist of a positive electrode, a negative electrode, a separator, and an electrolyte, wherein the positive electrode and the negative electrode include an active material capable of intercalation and de-intercalation of lithium ions.

As a positive electrode active material for lithium secondary batteries, lithium cobalt oxide (LiCoO₂), lithium nickel oxide (LiNiO₂), lithium manganese oxide (LiMnO₂ or LiMnO₄, etc.), lithium iron phosphate compound (LiFePO₄), and the like have been used. Among these, lithium cobalt oxide has the advantage of high operating voltage and excellent capacity characteristics, but the price of cobalt, which is a raw material, is high and its supply is unstable, which makes it difficult to apply it commercially to large-capacity batteries. Lithium nickel oxide has poor structural stability, which makes it difficult to achieve sufficient life characteristics. On the other hand, lithium manganese oxide having a spinel structure has excellent stability, but has the problem that capacity characteristics deteriorate. Thus, lithium composite transition metal oxides containing two or more types of transition metals have been developed and used in order to compensate for the problems of lithium transition metal oxides containing Ni, Co, or Mn alone. Among these, as it has become known that oxides containing excessive lithium and having a higher Mn content than that of other metals except lithium (hereinafter referred to as "lithium-rich manganese-based oxide") can secure high energy density as high-capacity active materials, research and interest in this field are increasing significantly.

However, in the case of a lithium-rich manganese-based oxide, there are drawbacks in that the resistance of the electrode is high and the capacity characteristics such as discharge capacity are not sufficient. In addition, the lithium-rich manganese-based oxide has a structure in which a layered phase and a rock-salt phase are mixed. During the activation process of the rock-salt phase, a considerable amount of gas may be generated along with excess lithium ions. Such a gas generation may cause deterioration of the positive electrode, which may result in a decrease in life characteristics.

Therefore, there is a continuing need to develop a positive electrode active material that includes a lithium-rich manganese-based oxide and exhibits excellent life characteristics along with improved capacity characteristics.

### [DETAILED DESCRIPTION OF THE INVENTION]

### [Technical Problem]

It is an object of the present disclosure to provide a positive electrode active material that includes a lithium-rich manganese-based oxide and thus exhibits improved capacity characteristics as well as excellent life characteristics and rolling characteristics, and a method for preparing the same.

It is another object of the present disclosure to provide a positive electrode and a lithium secondary battery that include a lithium-rich manganese-based oxide and thus exhibits improved discharge capacity, excellent life characteristics, and the like.

### [Technical Solution]

In one aspect of the present disclosure, there is provided a positive electrode active material comprising:
a lithium-rich manganese-based oxide represented by the following Chemical Formula 1, and having a structure in which a rock-salt-type lithium manganese oxide and a layered lithium transition metal oxide are mixed,
wherein the lithium-rich manganese-based oxide has an internal porosity of 2.5% to 13.0%:

   [Chemical Formula 1] Liₐ[Ni_{b}Co_{c}Mn_{d}Mₑ]O₂
in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

In Chemical Formula 1, 1.10≤a≤1.5, 0.10≤b≤0.40, 0≤c≤0.05, 0.47≤d≤0.80, and 0≤e≤0.10.

In Chemical Formula 1, 1.12<a<1.18, 0.24<b<0.36, 0<c<0.10, 0.47≤d<0.63, 0<e<0.05, and M may be at least one selected from the group consisting of Al, Mg, V, Ti, Zr, Nb and W.

In the lithium-rich manganese-based oxide, the rock-salt-type lithium manganese oxide may include Li₂MnO₃, and it may have a structure in which a layered lithium transition metal oxide containing nickel, cobalt and manganese is mixed therewith. This lithium-rich manganese-based oxide may be represented by the following Chemical Formula 2:

[Chemical Formula 2] X Li₂MnO₃ · (1-X)Li[Ni_{1-y-z-w}Mn_{y}Co_{z}M_{w}]O₂

in Chemical Formula 2,
0.2≤X≤0.5, 0.4≤y<1, 0≤z≤0.1, 0≤w≤0.2, and M is at least one selected from the group consisting of Al, B, Co, W, Mg, V, Ti, Zn, Ga, In, Ru, Nb, Sn, Sr and Zr.

The positive electrode active material has a secondary particle shape in which a plurality of primary particles having a particle size of 50 nm to 200 nm are aggregated, and the D₅₀ of the secondary particles may be 2 to 10 µm.

In another aspect of the present disclosure, there is provided a method for preparing a positive electrode active material, the method comprising the steps of: (A) mixing a lithium-rich manganese-based transition metal hydroxide precursor containing nickel, cobalt and manganese, and a lithium raw material; and (B) firing the mixture at a temperature of 600°C or more to form a lithium-rich manganese-based oxide represented by the Chemical Formula 1.

In the method for preparing a positive electrode active material, the lithium-rich manganese-based transition metal hydroxide precursor may be a compound represented by the following Chemical Formula 1a:

[Chemical Formula 1a] Ni_{b}Co_{c}Mn_{d}Mₑ(OH)₂

in Chemical Formula 1a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

Further, the lithium-rich manganese-based transition metal hydroxide precursor may be formed by subjecting a transition metal raw material, for example, a manganese raw material, a nickel raw material, a cobalt raw material, and the like to a co-precipitation reaction at pH 9.5 to 12.

Further, in the method for preparing a positive electrode active material, the firing may be performed at a temperature of 600 to 1000°C.

The lithium-rich manganese-based oxide prepared in this way may be represented by the Chemical Formula 2.

In yet another aspect of the present disclosure, there are provided a positive electrode containing the above-mentioned positive electrode active material and a lithium secondary battery comprising the positive electrode.

### [Advantageous Effects]

The positive electrode active material according to the present disclosure includes a lithium-rich manganese-based oxide having an internal porosity of a specific range, thereby improving the contact state between the positive electrode active material particles, while it has a relatively large specific surface area, which allows the electrolyte to easily penetrate into the positive electrode active material. As a result, the positive electrode active material can exhibit capacity characteristics such as lower resistance and improved discharge capacity compared to the existing lithium-rich manganese-based oxide.

In addition, the positive electrode active material of the present disclosure can exhibit excellent contact and packing properties between active material particles after rolling the positive electrode as the internal porosity is optimized, and can suppress not only side reactions and gas generation but also particle cracking during rolling. As a result, the deterioration of the positive electrode active material may be suppressed during the charge and discharge process of the battery, thereby exhibiting excellent life characteristics.

### [BRIEF DESCRIPTION OF THE DRAWINGS]

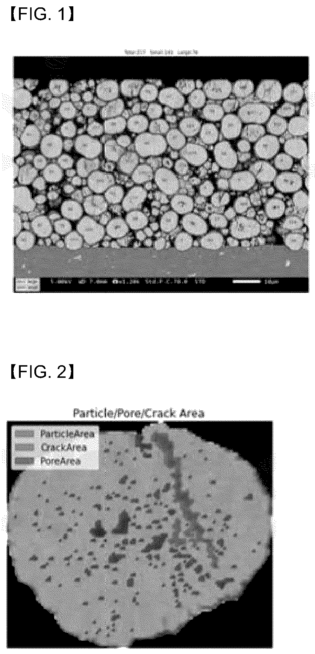

FIG. 1 is a photograph showing a state in which cross-sectional image data of positive electrode active material particles is extracted from an electron microscope photograph of a positive electrode cross section using digital transformation technology in order to analyze the internal porosity of the positive electrode active material.
FIG. 2 is a photograph showing a state in which a particle area, an internal pore area, and an internal crack area are divided from cross-sectional image data of the positive electrode active material particle and extracted into image data in order to analyze the internal porosity of the positive electrode active material.

### [DETAILED DESCRIPTION OF THE EMBODIMENTS]

Terms or words used in the specification and the appended claims should not be construed as limited to ordinary or dictionary meanings, and the present invention should be construed with meanings and concepts that are consistent with the technical idea of the present invention based on the principle that the inventors may appropriately define concepts of the terms to appropriately describe their own invention in the best way.

In the present disclosure, "secondary particle" refers to a particle formed by aggregation of several tens to several hundreds of primary particles. More specifically, a secondary particle is an aggregate of 50 primary particles or more.

In the present disclosure, when a "particle" is described, any one or all of a single particle, a pseudo-single crystal, a primary particle, a nodule, and a secondary particle may be encompassed.

Further, in the present disclosure, "D₅₀" refers to a particle size corresponding to a cumulative volume of 50% in the particle size distribution of a positive electrode active material. The average particle size D₅₀ may be measured by a laser diffraction method. For example, the average particle size may be measured by dispersing a positive electrode active material powder in a dispersion medium, introducing the resultant into a commercially available laser diffraction particle size analyzer (e.g., Microtrac MT 3000), performing irradiation with ultrasonic waves at a frequency of about 28 kHz and an output of 60 W, obtaining a volume-cumulative particle size distribution graph, and then determining a particle size corresponding to a cumulative volume of 50%.

In the following, the "internal porosity" can be calculated by an arithmetic mean value after going through the processes of obtaining an SEM image of the cross section of the positive electrode using a scanning electron microscope(SEM), selecting positive electrode active material particles having a prescribed particle size, for example, a particle size equal to D₅₀ or a particle size of D₅₀±0.1 µm, from the SEM image to analyze the SEM image, and measuring the ratio of the area of the pores to the cross-sectional area of the positive electrode active material particles.

Hereinafter, specific embodiments of the disclosure will be described in detail.

### Positive electrode active material

A positive electrode active material according to one aspect of the present disclosure may include a lithium-rich manganese-based oxide represented by the following Chemical Formula 1, and having a structure in which a rock-salt-type lithium manganese oxide and a layered lithium transition metal oxide are mixed,

[Chemical Formula 1] Liₐ[Ni_{b}Co_{c}Mn_{d}Mₑ]O₂

in Chemical Formula 1, M may be at least one selected from the group consisting of Al, B, Co, W, Mg, V, Ti, Zn, Ga, In, Ru, Nb, Sn, Sr and Zr. Preferably, M may be at least one selected from the group consisting of Al, W, Mg, V, Ti, Zr and Nb.

Meanwhile, the a is the molar ratio of Li in the lithium-rich manganese-based oxide, which may be 1.00<a, 1.10≤a≤1.5, or 1.12<a<1.18. When the a satisfies the above range, high capacity characteristics and high energy density per unit volume can be achieved.

The b is the molar ratio of Ni in the lithium-rich manganese-based oxide, which may be 0≤b≤0.53, 0.10≤b≤0.40, or 0.24<b<0.36.

The c is the molar ratio of Co in the lithium-rich manganese-based oxide, which may be 0≤c≤0.10, 0≤c≤0.05, or 0<c<0.10. When the c exceeds 0.1, it is difficult to secure a high capacity, generation of gas and deterioration of the positive electrode active material become intensified, which may cause a deterioration of life characteristics.

The d is the molar ratio of Mn in the lithium-rich manganese-based oxide, which may be 0.47≤d≤1.00, 0.47≤d≤0.80, or 0.47≤d<0.63. When the d is less than 0.47, the ratio of the rock-salt phase becomes too small, and thus the capacity improvement effect is insignificant.

The e is the molar ratio of the additional element M in the lithium-rich manganese-based oxide, which may be 0≤e≤0.20, 0≤e≤0.10, or 0<e<0.05. When the content of the additional element is too high, it may adversely affect the capacity of the active material.

The lithium-rich manganese-based oxide has a structure in which a layered lithium transition metal oxide and a rock-salt-type lithium manganese oxide(Li₂MnO₃) are mixed, wherein excessive lithium ions are generated while the rock-salt phase is activated during the initial activation process. Further, an oxygen-redox reaction occurs during the activation process of the rock-salt phase, and such excessive lithium ion generation and oxygen-redox reaction can contribute to improving the capacity of the positive electrode active material. However, a large amount of gas may be generated during the activation process of the rock-salt phase, which may lead to degradation of the positive electrode and deterioration of life characteristics. In addition, the lithium-rich manganese-based oxide has the disadvantage that it relatively increases the resistance of the positive electrode, resulting in insufficient discharge capacity.

Continuous research results of the present inventors showed that the above-mentioned drawbacks can be solved by including a lithium-rich manganese-based oxide having an internal porosity of a specific range. More specifically, the optimization of the internal porosity improves the contact state between the positive electrode active material particles, while the relatively large specific surface area facilitates the penetration of the electrolyte into the positive electrode active material. As a result, it has been confirmed that the positive electrode active material exhibits improved discharge capacity and low resistance compared to existing lithium-rich manganese-based oxides.

In addition, as the positive electrode active material optimizes the internal porosity, it can exhibit excellent contact and packing properties between active material particles after positive electrode rolling and can also suppress particle cracking during rolling. In addition, side reactions and gas generation during the activation can be suppressed. As a result, deterioration of the positive electrode can be suppressed during the charge and discharge process of the battery, thereby exhibiting excellent life characteristics.

Thus, in one aspect, the internal porosity of the lithium-rich manganese-based oxide may be 2.5% to 13.0%, or 3.0% to 12.0%, or 4.0% to 11.0%. If the internal porosity is too low, electrolyte penetration may not be smooth due to a decrease in the specific surface area of the positive electrode active material, capacity characteristics such as discharge capacity may be insufficient, or resistance of the positive electrode may increase. Conversely, if the internal porosity is too high, many cracks may occur in the positive electrode active material particles during rolling of the positive electrode. In addition, the occurrence of side reactions increases during the activation process of the rock-salt phase, which may lead to deterioration of the positive electrode and a decrease in life characteristics.

Meanwhile, the lithium-rich manganese-based oxide may be represented by the following Chemical Formula 2:

[Chemical Formula 2] X Li₂MnO₃ · (1-X)Li[Ni_{1-y-z-w}Mn_{y}Co_{z}M_{w}]O₂

in Chemical Formula 2, M is at least one selected from the group consisting of Al, B, Co, W, Mg, V, Ti, Zn, Ga, In, Ru, Nb, Sn, Sr and Zr.

The X means the ratio of the rock-salt phase (Li₂MnO₃) in the lithium-rich manganese-based oxide, which may be 0.2≤X≤0.5, 0.25≤X≤0.5, or 0.25≤X≤0.4. When the ratio of the rock-salt phase (Li₂MnO₃) in the lithium-rich manganese-based oxide satisfies the above range, it is possible to realize high capacity characteristics.

The y is the molar ratio of Mn in the layered phase (LiM'O₂), which may be 0.4≤y<1, 0.4≤y≤0.8, or 0.4≤y≤0.7.

The z is the molar ratio of Co in the layered phase (LiM'O₂), which may be 0≤z≤0.1, 0≤z≤0.08, or 0≤z≤0.05. When the z exceeds 0.1, generation of gas and deterioration of the positive electrode active material become intensified, which results in a decrease in life characteristics.

The w is the molar ratio of the additional element M in the layered phase (LiM'O₂), which may be 0≤w≤0.2, 0≤w≤0.1, or 0≤w≤0.05.

Further, the positive electrode active material of one aspect of the disclosure may be in the form of secondary particles in which a plurality of primary particles are aggregated. At this time, the primary particles may have a particle size of 50 nm to 200 nm, or 60 nm to 180 nm, or 70 nm to 150 nm, and the average particle size D₅₀ of the secondary particles may be 2 µm to 10 µm, or 3 µm to 9 µm, or 4 µm to 7 µm.

At this time, the particle size of the primary particles may be proportional to the particle size of the precursor for preparing the lithium-rich manganese-based oxide, and may be considered as a factor for achieving the above-mentioned internal porosity. If the particle size of the primary particles is too large, the internal porosity may decrease, and if the particle size of the primary particles is too small, the internal porosity may increase excessively.

In addition, since the positive electrode active material having the secondary particle shape has the above-mentioned D₅₀ range, excellent electrode density can be achieved after rolling and capacity characteristics can be improved. If the D₅₀ of the positive electrode active material is too small, it is difficult to achieve high rolling density, and the rolling characteristics and energy density may be lowered. If the D₅₀ is too large, the lithium mobility of the positive electrode active material may decrease, and the resistance of a lithium secondary battery containing the same may increase.

### Method for preparing positive electrode active material

Next, the method for preparing the above-mentioned positive electrode active material will be described.

A method for preparing a positive electrode active material according to another aspect of the disclosure comprises the steps of: (A) mixing a lithium-rich manganese-based transition metal hydroxide precursor, and a lithium raw material; and (B) firing the mixture at a temperature of 600°C or more to form a lithium-rich manganese-based oxide represented by the Chemical Formula 1.

In a more specific embodiment, the lithium-rich manganese-based transition metal hydroxide precursor may be a compound represented by the following Chemical Formula 1a, and may have a particle size corresponding to or proportional to the primary particles of the lithium-rich manganese-based oxide described above:

[Chemical Formula 1a] Ni_{b}Co_{c}Mn_{d}Mₑ(OH)₂

in Chemical Formula 1a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

As confirmed through the following examples, in order to obtain an appropriate primary particle size (e.g., 50 nm to 200 nm) of the above-mentioned lithium-rich manganese-based oxide, the preparation process of the lithium-rich manganese-based transition metal hydroxide precursor can controlled to optimize the primary particle size of the precursor, while the firing temperature for the mixture of such precursor and lithium raw material may be adjusted to 600°C or more, or 600 to 1000°C, or 750 to 950°C. As a result, it was confirmed that a positive electrode active material of one aspect having the above-mentioned internal porosity can be prepared.

At this time, if the primary particle size of the precursor and the lithium-rich manganese-based oxide is too small or the firing temperature is too low, a positive electrode active material having an excessively large internal porosity may be prepared. Conversely, if the primary particle size of the precursor and the lithium-rich manganese-based oxide is too large or the firing temperature is too high, a positive electrode active material having an excessively small internal porosity may be prepared.

**In** a more specific embodiment, in order to achieve the appropriate primary particle size and internal porosity of the precursor and the lithium-rich manganese-based oxide, the lithium-rich manganese-based transition metal hydroxide precursor may be formed by subjecting each transition metal raw material, for example, a manganese raw material, a nickel raw material, a cobalt raw material (and a raw material of additional element M), and the like to a co-precipitation reaction under conditions of pH 9.5 to 12 or pH 9.5 to 11.5. During such a co-precipitation reaction, if the pH becomes too low, the internal porosity of the positive electrode active material may become too small, and if the pH becomes too high, the internal porosity may become excessively large.

By controlling the above-mentioned overall conditions, it is possible to prepare a positive electrode active material of one aspect that includes the lithium-rich manganese-based oxide represented by the Chemical Formula 1 and/or Chemical Formula 2 and satisfies a prescribed internal porosity.

Meanwhile, in the preparation method of the other aspect mentioned above, as the lithium raw material, for example, lithium-containing carbonates (e.g., lithium carbonate, etc.), hydrates (e.g., lithium hydroxide hydrate (LiOH·H₂O), etc.), hydroxides (e.g., lithium hydroxide, etc.), nitrates (e.g., lithium nitrate (LiNO₃), etc.), chlorides (e.g., lithium chloride (LiCl), etc.), or the like can be used, and among these, one type alone or a mixture of two or more types may be used.

Further, as mentioned above, the lithium-rich manganese-based transition metal hydroxide precursor of Chemical Formula 1a can be prepared through a co-precipitation process at a prescribed pH. At this time, it can be prepared by dissolving each transition metal raw material in a solvent to prepare a metal solution, then mixing the metal solution, an ammonium cation complexing agent, and a basic compound such as sodium hydroxide, and then proceeding a co-precipitation reaction. Further, if necessary, an oxidizing agent or oxygen gas may be further added during the co-precipitation reaction.

Further, the transition metal raw material may be acetate, carbonate, nitrate, sulfate, halide, sulfide, and the like of each transition metal. Specifically, the transition metal raw material may be NiO, NiCO₃·2Ni(OH)₂·4H₂O, NiC₂O₂·2H₂O, Ni(NO₃)₂·6H₂O, NiSO₄, NiSO₄·6H₂O, Mn₂O₃, MnO₂, Mn₃O₄, MnCO₃, Mn(NO₃)₂, MnSO₄·H₂O, manganese acetate, manganese halide, cobalt oxide, cobalt sulfate, cobalt nitrate, cobalt acetate, cobalt halide, and the like.

The ammonium cation complexing agent may be at least one selected from the group consisting of NH₄OH, (NH₄)₂SO₄, NH₄NO₃, NH₄Cl, CH₃COONH₄, and (NH₄)₂CO₃.

The basic compound may be at least one selected from the group consisting of NaOH, KOH, and Ca(OH)₂. A precursor in the form of a hydroxide can be obtained using such a basic compound, and a precursor having an appropriate primary particle size can be prepared by controlling the pH during the co-precipitation reaction.

Meanwhile, after preparing the lithium-rich manganese-based transition metal hydroxide precursor, such a precursor can be mixed with a lithium raw material and fired. At this time, the precursor and the lithium raw material can be mixed in an amount such that the molar ratio of total transition metals (e.g., Ni, Co, Mn, etc.) : Li is 1:1.05-1:2, or 1:1.1-1:1.8, or 1:1.25-1:1.8.

In addition, the firing step may be carried out in an air or oxygen atmosphere, for example, in an atmosphere containing 20% to 100% by volume of oxygen. Further, in order to effectively prepare a positive electrode active material of one aspect having a prescribed internal porosity by growing primary particles, the firing is performed at a temperature of 600°C or more, or 600 to 1000°C, or 750 to 950°C for 5 to 30 hours, 7 to 25 hours, or 9 to 20 hours.

If the firing temperature is too low or the firing time is too short, a positive electrode active material having an excessively large internal porosity may be prepared. Conversely, if the firing temperature is too high or the firing time is too long, a positive electrode active material having an excessively small internal porosity may be prepared.

### Positive electrode

Next, a positive electrode comprising the above-mentioned positive electrode active material will be described.

This positive electrode includes the positive electrode active material of one aspect described above. Specifically, the positive electrode includes a positive electrode current collector and a positive electrode active material layer formed on the positive electrode current collector, wherein the positive electrode active material layer includes the positive electrode active material of one aspect. Since the positive electrode active material has been described above, a detailed description thereof will be omitted, and only the remaining components will be described in detail below.

The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, heat-treated carbon, or aluminum or stainless steel of which surface is treated with carbon, nickel, titanium, silver, or the like may be used. The positive electrode current collector may generally have a thickness of 3 µm to 500 µm, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material layer may optionally include a conductive material and a binder as necessary, along with the positive electrode active material.

At this time, the positive electrode active material may be contained in an amount of 80% by weight to 99% by weight, more specifically, 90% by weight to 98% by weight, based on the total weight of the positive electrode active material layer.

The conductive material is used to impart conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, and carbon fiber; metal powder or metal fibers such as copper, nickel, aluminum and silver; conductive tubes such as carbon nanotube; conductive whiskers such as zinc oxide whiskers and potassium titanate whiskers; conductive metal oxides such as titanium oxide; or a conductive polymer such as a polyphenylene derivative, and any one type alone or a mixture of two or more types of them can be used. The conductive material may be contained in an amount of 0.01% by weight to 10% by weight, preferably 0.1% by weight to 9% by weight, and more preferably 0.1% by weight to 5% by weight, based on the total weight of the negative electrode active material layer.

Further, the binder serves to improve adhesion between the positive electrode active material particles and adhesive force between the positive active material and the current collector. Specific examples thereof may include polyvinylidene fluoride(PVDF), a polyvinylidenefluoride-hexafluoropropylene copolymer(PVdF-co-HFP), polyvinyl alcohol, polyacrylonitrile, polymethymethaxrylate, carboxymethylcellulose(CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber(SBR), fluorine rubber, polyacrylic acid, and a polymer having the hydrogen thereof substituted with Li, Na, or Ca, or various copolymers thereof, and any one type alone or a mixture of two or more types of them can be used. The binder may be contained in an amount of 1% by weight to 30% by weight, preferably 1% by weight to 20% by weight, and more preferably 1% by weight to 10% by weight, based on the total weight of the positive electrode active material layer.

### Lithium secondary battery

Next, the lithium secondary battery according to the present disclosure will be described.

The lithium secondary battery includes a positive electrode, a negative electrode located opposite to the positive electrode, a separator interposed between the positive electrode and the negative electrode, and electrolyte.

In addition to this, the positive electrode is the same as the contents described above, and thus, a detailed description thereof will be omitted, and only the remaining components will be described in detail below.

The negative electrode includes a negative electrode current collector and a negative electrode active material layer located on the negative electrode current collector.

The negative electrode current collector is not particularly limited as long as it has high conductivity without causing a chemical change in the battery, and, for example, copper, stainless steel, aluminum, nickel, titanium, heat-treated carbon, or copper or stainless steel of which surface is treated with carbon, nickel, titanium, silver, or the like, an aluminum-cadmium alloy, or the like can be used. Further, the negative electrode current collector may generally have a thickness of 3µm to 500 µm. Also, similar to the positive electrode current collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material layer optionally includes a binder and a conductive material along with the negative electrode active material.

As the negative electrode active material, a compound capable of reversible intercalation and deintercalation of lithium can be used. Specific examples thereof may include a carbonaceous material such as artificial graphite, natural graphite, graphitized carbon fiber or amorphous carbon; a (semi)metal-based material capable of alloying with lithium, such as Si, Al, Sn, Pb, Zn, Bi, In, Mg, Ga, Cd, Si alloy, Sn alloy, or Al alloy; (semi)metal oxides capable of doping and de-doping lithium, such as SiO_{β} (0<β< 2), SnO₂, vanadium oxide, and lithium vanadium oxide; a composite containing the (semi)metal-based material and the carbonaceous material, such as Si-C composite or Sn-C composite, and any one alone or a mixture of two or more thereof can be used. Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature heat-treated carbon such as mesophase pitches and petroleum or coal tar pitch derived cokes.

The negative electrode active material may be contained in an amount of 80% by weight to 99% by weight, 82% by weight to 99% by weight, or 84% by weight to 99% by weight based on the total weight of the negative electrode active material layer.

The binder is a component that assists in the binding between the conductive material, the active material and the current collector, and is usually added in an amount of 0.1% by weight to 10% by weight based on the total weight of the negative electrode active material layer. Examples of such a binder may include polyvinylidene fluoride(PVDF), polyvinyl alcohol, carboxymethyl cellulose(CMC), starch, hydroxypropylcellulose, regenerated cellulose, polyvinyl pyrrolidone, polytetrafluoroethylene, polyethylene, polypropylene, an ethylene-propylene-diene monomer(EPDM), a sulfonated EPDM, styrene butadiene rubber, nitrile butadiene rubber, fluoro rubber, or various copolymers thereof.

The conductive material is a component that further improves the conductivity of the negative electrode active material, and may be included in an amount of 1% by weight to 30% by weight, 1% by weight to 20% by weight, or 1% by weight to 10% by weight based on the total weight of the negative electrode active material layer. Such a conductive material is not particularly limited as long as it has conductivity without causing a chemical change in the battery, and, for example, graphite such as natural graphite and artificial graphite; carbon black such as acetylene black, ketjen black, channel black, furnace black, lamp black, or thermal black; conductive fibers such as carbon fibers or metal fibers; fluorinated carbon; metal powder such as aluminum powder, and nickel powder; conductive whiskers such as zinc oxide whiskers and potassium titanate whiskers; conductive metal oxide such as titanium oxide; or polyphenylene derivatives, can be used.

The negative electrode active material layer may be prepared by applying a negative electrode slurry composition, which is prepared by dissolving or dispersing a negative electrode active material and optionally a binder and a conductive material in a solvent, onto a negative electrode current collector, followed by drying. Alternatively, the negative electrode active material layer may be prepared by casting the negative electrode slurry composition on a separate support, and then laminating a film peeled off from the support on a negative electrode current collector.

Meanwhile, in the lithium secondary battery, the separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Further, a typical porous non-woven fabric, for example, a non-woven fabric formed of glass fiber having a high melting point, polyethylene terephthalate fiber, or the like may be used. Further, a coated separator including a ceramic component or a polymer material may be used to secure heat resistance or mechanical strength, and may be selectively used in a single-layered or a multi-layered structure.

In addition, the electrolyte may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery can move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond aromatic ring or ether bond); amides such as dimethylformamide; dioxolanes such as 1,3-dioxolane; or sulfolanes can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/discharging performance of a battery, is more preferable.

The lithium salt can be used without particular limitation as long as it may provide lithium ions used in a lithium secondary battery. Specifically, the anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or the like. As the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, Lil, LiB(C₂O₄)₂, or the like can be used. The lithium salt may be used in a concentration range of 0.1 M to 4.0 M, preferably 0.5M to 3.0M, and more preferably 1.0M to 2.0M. When the concentration of the lithium salt is included within the above range, the electrolyte has suitable conductivity and viscosity, thereby exhibiting excellent electrolyte performance, and lithium ions can effectively move.

In order to improve the life characteristics of a battery, suppress the decrease in battery capacity, and improve the discharge capacity of the battery, the electrolyte may, in addition to the electrolyte components, further include one or more kinds of additives, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like. At this time, the additive may be included in an amount of 0.1 to 10 parts by weight based on a total weight of the electrolyte.

The lithium secondary battery including the positive electrode active material of one aspect as described above stably exhibits excellent discharge capacity, output properties, and capacity retention, and thus, are useful for portable devices such as a mobile phone, a notebook computer, and a digital camera, and in the field of electric vehicles such as a hybrid electric vehicle(HEV).

Therefore, according to an additional embodiment, a battery module including the lithium secondary battery as a unit cell, and a battery pack including the same are provided.

The battery module or the battery pack can be used as a power source of one or more medium-and-large-sized devices, for example, a power tool, an electric vehicle such as an electric vehicle(EV), a hybrid electric vehicle, and a plug-in hybrid electric vehicle(PHEV), or a power storage system.

Hereinafter, embodiments of the present disclosure have been described in detail, so that those skilled in the technical field to which the invention belongs can easily carry out them. However, the present disclosure can be modified into other various forms, and the scope thereof is not limited to the embodiments set forth herein.

### Examples and Comparative Examples

### Example 1

Manganese sulfate and nickel sulfate were dissolved in a molar ratio of manganese : nickel of 65 : 35 to obtain a mixed salt solution (metal solution) with a concentration of 2 mol/L, and sodium hydroxide (basic compound) was dissolved to obtain a precipitant solution. Further, aqueous ammonia was dissolved at a certain concentration to obtain a complexing agent solution. The precipitant solution, the complexing agent solution and the mixed salt solution were added together to a reaction kettle in a co-current flow mode, and allowed to react for 20 hours at a temperature of 45°C, pH value of 9.5, and stirring speed of 700rpm. The slurry was suction filtered and washed, and the filter cake was dried at 105°C and sieved to prepare a precursor of Ni_{0.35}Mn_{0.65}(OH)₂.

The precursor of Ni_{0.35}Mn_{0.65}(OH)₂ and lithium hydroxide (LiOH) were added to a Henschel mixer (700L) so that the molar ratio of Li: transition metal (Ni + Mn) was 1.3: 1, and mixed at 300 rpm for 20 minutes. The mixture was placed in an alumina crucible with a size of 330 mm × 330 mm, and fired at 850°C for 10 hours in an oxygen atmosphere to prepare the positive electrode active material of Example 1. It was confirmed that the positive electrode active material of Example 1 has a composition of 0.3{Li₂MnO₃}·0.7{Li[Ni_{0.5}Mn_{0.5}]O₂}, and has a secondary particle shape in which a plurality of primary particles with a particle size of 50 nm to 200 nm were aggregated, and the D50 of the secondary particles was 5 µm.

### Example 2

The positive electrode active material of Example 2 was prepared in the same manner as Example 1, except that the pH during the preparation of the precursor was controlled to 11.5, and the firing temperature for the preparation of the positive electrode active material was adjusted to 750°C.

### Comparative Example 1

The positive electrode active material of Comparative Example 1 was prepared in the same manner as Example 1, except that the pH during the preparation of the precursor was controlled to 9, and the firing temperature for the preparation of the positive electrode active material was adjusted to 1050°C.

### Preparation Example: Preparation of positive electrode and lithium secondary battery

The positive electrode active materials of Examples or Comparative Example: single-walled carbon nanotube: PVDF binder were mixed in N-methylpyrrolidone at a weight ratio of 96.0:1.0:3.0 to prepare a positive electrode slurry. The positive electrode slurry was coated onto an aluminum current collector sheet, dried, and rolled to prepare a positive electrode.

Graphite negative electrode active material: single-walled carbon nanotube: styrene-butadiene rubber (SBR): carboxymethyl cellulose(CMC) were mixed in water at a weight ratio of 96.2:0.8:2:1 to prepare a negative electrode slurry. The negative electrode slurry was coated onto a copper current collector sheet, dried, and rolled to prepare a negative electrode.

Meanwhile, the positive electrode and the negative electrode were prepared by adjusting the loading amount so that the ratio of the negative electrode discharge capacity to the positive electrode discharge capacity (N/P ratio) was 115%.

A polyethylene separator was interposed between the positive and negative electrodes prepared as above to prepare an electrode assembly. The electrode assembly was inserted into the battery case, and then the electrolyte was injected therein, charged at 45°C at a constant current of 0.1C until reaching 4.6V, and discharged up to 2.0V with a constant current of 0.1C. An activation process was performed in this way to prepare a lithium secondary battery.

### Experimental Example 1: Cross-sectional observation of positive electrode active material and measurement of internal porosity

The cross section of the positive electrode obtained in the Preparation Example using the positive electrode active materials of Examples 1 and 2 or Comparative Example 1 was analyzed using a scanning electron microscope. From the SEM image of the cross section of this positive electrode, cross-sectional image data of the positive electrode active material particles were extracted using digital transformation technology. For reference, FIG. 1 shows a photograph of cross-sectional image data of the positive electrode active material particles extracted from a cross-sectional SEM image of a positive electrode prepared with the positive electrode active material of Example 1.

Among the cross-sectional image data of such positive electrode active material particles, image data of 2500 positive electrode active material particles having a particle size equal to D₅₀ of the positive electrode active material or a particle size of D₅₀±0.1 µm were selected. From the image data of each particle, the particle area, internal pore area, and internal crack area were divided and extracted as image data (see FIG. 2).

From these image data, the area percentage of the pore area relative to the total cross-sectional area of the positive electrode active material particles was measured to calculate the porosity. The internal porosity of the positive electrode active material of the Examples or Comparative Example was calculated from the arithmetic mean value of the porosity for the 2,500 particles.

The internal porosity of the positive electrode active materials of each Example and Comparative Example is shown in Table 1 below.

**[Table 1]**

| | Example 1 | Example 2 | Comparative Example 1 |
|---|---|---|---|
| Internal porosity (%) | 7.7 | 11.0 | 2.2 |

### Experimental Example 2: Evaluation of electrochemical properties

The lithium secondary batteries prepared with the positive electrode active materials of the Examples or Comparative Example were subjected to charge/discharge tests in the voltage range of 4.4V to 2.5V under conditions of 25°C, 0.1C, and 0.33C. The discharge capacity was evaluated from the results of such charge/discharge tests, and the evaluation results are shown in Table 2 below. In addition, while repeating this charge/discharge test for 50 cycles or more, the capacity retention during 50 cycles of charge/discharge was measured and evaluated. The results are shown together in Table 2 below.

**[Table 2]**

| | Example 1 | Example 2 | Comparative Example 1 |
|---|---|---|---|
| Capacity retention (%) | 96.5 | 95 | 97 |
| 0.33C discharge capacity (mAh/g) | 204 | 208 | 194 |

Referring to Table 2, it was confirmed that the positive electrode active materials of Examples 1 and 2 in which the internal porosity was optimized showed an excellent capacity retention comparable to Comparative Example 1, while also showing improved discharge capacity.

## Claims

1. A positive electrode active material comprising:
a lithium-rich manganese-based oxide represented by the following Chemical Formula 1, and having a structure in which a rock-salt-type lithium manganese oxide and a layered lithium transition metal oxide are mixed,
wherein the lithium-rich manganese-based oxide has an internal porosity of 2.5% to 13.0%:
[Chemical Formula 1] Liₐ[Ni_{b}Co_{c}Mn_{d}Mₑ]O₂
in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

2. The positive electrode active material of claim 1, wherein:
in Chemical Formula 1, 1.10≤a≤1.5, 0.10≤b≤0.40, 0≤c≤0.05, 0.47≤d≤0.80, and 0≤e≤0.10.

3. The positive electrode active material of claim 1, wherein:
in Chemical Formula 1, 1.12<a<1.18, 0.24<b<0.36, 0<c<0.10, 0.47≤d<0.63, 0<e<0.05, and M is at least one selected from the group consisting of Al, Mg, V, Ti, Zr, Nb and W.

4. The positive electrode active material of claim 1, wherein the rock-salt-type lithium manganese oxide includes Li₂MnO₃.

5. The positive electrode active material of claim 1, wherein the lithium-rich manganese-based oxide is represented by the following Chemical Formula 2:
[Chemical Formula 2] X Li₂MnO₃ · (1-X)Li[Ni_{1-y-z-w}Mn_{yC}o_{z}M_{w}]O₂
in Chemical Formula 2, 0.2≤X≤0.5, 0.4≤5y<1, 0≤z≤0.1, 0≤w≤0.2, and M is at least one selected from the group consisting of Al, B, Co, W, Mg, V, Ti, Zn, Ga, In, Ru, Nb, Sn, Sr and Zr.

6. The positive electrode active material of claim 1, wherein the positive electrode active material has a secondary particle shape in which a plurality of primary particles having a particle size of 50 nm to 200 nm are aggregated, and
the D₅₀ of the secondary particles is 2 to 10 µm.

7. A method for preparing a positive electrode active material of claim 1, the method comprising the steps of:
(A) mixing a lithium-rich manganese-based transition metal hydroxide precursor and a lithium raw material; and
(B) firing the mixture at a temperature of 600°C or more to form a lithium-rich manganese-based oxide represented by the following Chemical Formula 1.
[Chemical Formula 1] Liₐ[Ni_{b}Co_{c}Mn_{d}Mₑ]O₂
in Chemical Formula 1, 1.00<a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

8. The method for preparing a positive electrode active material of claim 7, wherein the lithium-rich manganese-based transition metal hydroxide precursor is represented by the following Chemical Formula 1a:
[Chemical Formula 1a] Ni_{b}Co_{c}Mn_{d}Mₑ(OH)₂
in Chemical Formula 1a, 0≤b≤0.53, 0≤c≤0.10, 0.47≤d≤1.00, 0≤e≤0.20, and M is at least one selected from the group consisting of Al, B, Co, W, Mg, V, Ti, Zn, Ga, In, Ru, Nb, Sn, Sr and Zr.

9. The method for preparing a positive electrode active material of claim 7, wherein the lithium-rich manganese-based transition metal hydroxide precursor is formed by subjecting a transition metal raw material to a co-precipitation reaction at pH 9.5 to 12.

10. The method for preparing a positive electrode active material of claim 7, wherein the firing is performed at a temperature of 600 to 1000°C.

11. The method for preparing a positive electrode active material of claim 7, wherein the lithium-rich manganese-based oxide is represented by the following Chemical Formula 2:
[Chemical Formula 2] X Li₂MnO₃ · (1-X)Li[Ni_{1-y-z-w}Mn_{y}Co_{z}M_{w}]O₂
in Chemical Formula 2, 0.2≤X≤0.5, 0.4≤y<1, 0≤z≤0.1, 0≤w≤0.2, and M is at least one selected from the group consisting of Al, B, Co, W, Mg, V, Ti, Zn, Ga, In, Ru, Nb, Sn, Sr and Zr.

12. A positive electrode comprising the positive electrode active material of any one of claims 1 to 6.

13. A lithium secondary battery comprising a positive electrode, a negative electrode, a separator and an electrolyte,
wherein the positive electrode includes a positive electrode active material layer containing the positive electrode active material of any one of claims 1 to 6.
